# EUROPEAN PATENT APPLICATION

(11) **EP 3 406 745 A1**
(43) Date of publication of application: **28.11.2018**
(21) Application number: 17172145.9
(22) Date of filing: 22.05.2017
(51) Int. Cl.: C22B 3/44, C01G 49/02, C23G 1/36

(54) **PROCESSING OF A WASTE METAL MATERIAL COMPRISING AN IRON COMPONENT AND A NON-IRON METAL COMPONENT**

(71) Applicant: CMI UVK GmbH, 56410 Montabaur (DE)
(72) Inventor: VOGL, Dieter, 1090 Vienna (AT); KONLECHNER, David, 1020 Vienna (AT)
(74) Representative: Schwöbel, Thilo K.

(57) **Abstract**

The present invention relates to a method for processing a metal containing material, comprising at least one non-iron metal component and at least one iron component, wherein the metal containing material is at least partly separated into a solid iron oxide component and into at least part of the at least one non-iron metal component, the method comprising the following steps:
-- in a precipitation step, at least part of the at least one non-iron metal component is precipitated in an acid solution, the acid solution comprising the metal containing material and an added iron component, being added to the acid solution and comprising either a further iron component and/or an iron component in the form of an iron salt component, and, by means of the precipitation step, at least part of the at least one non-iron metal component is removed from the remaining acid solution, remaining after the precipitation step and comprising either at least part of the at least one iron component and/or at least part of the added iron component,
-- in a hydrolysis step, the remaining acid solution is at least partly hydrolyzed, at least partly yielding a solid iron oxide component, an acid component, and optionally a remaining part of the iron salt component.

## Description

### BACKGROUND

The present invention relates to a method for processing a metal containing material, comprising at least one non-iron metal component and at least one iron component, wherein the metal containing material is at least partly separated into a solid iron oxide component and into at least part of the at least one non-iron metal component.

Furthermore, the present invention relates to a system for processing a metal containing material, the metal containing material comprising and at least one non-iron metal component and at least one iron component, wherein the metal containing material is at least separated into a solid iron oxide component and into at least part of the at least one non-iron metal component.

In a number of industrial fields - such as the iron and steel industry, the zinc plating industry etc. -, metal waste containing iron components and non-iron metals arises during fabrication processes. In particular acid solutions containing iron salt components and non-iron metal salt components are present in various technological processes, such as pickling processes and separation processes of different metal components contained in ores. Such acid solutions can, e.g., comprise ferrous chloride, ferric chloride or combinations thereof as well as non-iron metal salt components like chlorides of zinc, nickel, copper, aluminum etc. In case these acid solutions are unwanted byproducts of an industrial process, they have been disposed of or stored as industrial waste for a long time. In recent years, the costs of disposal or treatment of such industrial waste have increased. Moreover, the involved acids themselves can be relatively expensive and processes to recover the acids are desirable. Apart from the high costs for disposal, remaining zinc components, nickel components etc. are a problem when treating sewage and can cause major environmental pollution. In pickling processes, the non-iron metal components that are present in the acid solution need to be separated from the acid solution in order to avoid the accumulation of said components during the recovery processes. For these reasons, recovery processes for the involved acids - such as hydrochloric acid - and precipitation steps to separate non-iron metal components from such acid solutions have been introduced in recent years.

Pyrohydrolysis is the most common and well known process to recover soluted metals from an acidic solution. The acid solution is injected into a furnace, water is evaporated and thus crystallized metal salt is roasted yielding acid and a metal oxide. This process is well known for more than forty years, especially in the steel industry to recover used pickling acid mainly containing ferrous chloride. However, this process is not selective. All elements comprised in the acid solution are found in the metal oxide, which is very disadvantageous, because there are certain applications (e.g., non-iron industry) where non-iron elements have to be separated from an acid solution containing iron.
An alternative method is the hydrolytic distillation, where ferric iron is hydrolyzed in the acid solution producing iron oxide and hydrogen chloride. This reaction is selective to ferric chloride. The iron can be separated from the acid solution while non-iron elements remain in the acid solution (Kovacs et al. US 3,682,592 A).
On the other hand, non-iron metal components can be crystallized as non-iron salts from an acid solution by increasing the free acid concentration. This is shown in Shanks et al. "Hydrogen Chloride Sparging Crystallization of the Chloride Sits of Cobalt, Manganese and Nickel", Bureau of Mines Report of Investigations, 1985, and in Nobel et. al. Solubilites of Chlrode Salts of Alkali and Alkaline-Earth Metals When Sparged With Hydrogen Chlorde", Bureau of Mines Report of Investigation, 1985.

Consequently, further improved processes for separating iron components from non-iron metal components in acid solutions are desired to simplify the industrial processes and minimize the disposal costs and environmental problems.

### SUMMARY

It is therefore an object of the present invention to provide a method and a system for separating at least one iron component from at least one non-iron metal component of a metal containing material, using cost and energy efficient procedures with little waste production.

This objective is achieved by a method for processing a metal containing material, comprising at least one non-iron metal component and at least one iron component, wherein the metal containing material is at least partly separated into a solid iron oxide component and into at least part of the at least one non-iron metal component, the method comprising the following steps:
-- in a precipitation step, at least part of the at least one non-iron metal component is precipitated in an acid solution, the acid solution comprising the metal containing material and an added iron component, being added to the acid solution and comprising either a further iron component and/or an iron component in the form of an iron salt component, and, by means of the precipitation step, at least part of the at least one non-iron metal component is removed from the remaining acid solution, remaining after the precipitation step and comprising either at least part of the at least one iron component and/or at least part of the added iron component,
-- in a hydrolysis step, the remaining acid solution is at least partly hydrolyzed, at least partly yielding a solid iron oxide component, an acid component, and optionally a remaining part of the iron salt component.

According to the present invention, it is advantageously possible to realize a method for processing a metal containing material, comprising at least one non-iron metal component and at least one iron component. Therein, metal containing material is at least partly separated into a solid iron oxide component and into at least part of the at least one non-iron metal component. It is possible that the method of the present invention comprises at least two steps.
The first step comprises a precipitation step, in which at least a part of the at least one non-iron metal component is precipitated in an acid solution. This acid solution comprises the said metal containing material and an added iron component, being added to the acid solution. The said iron component added to the solution comprises either a further iron component and/or an iron component in the form of an iron salt component. By means of precipitation, at least part of the at least one non-iron metal component is removed from the remaining acid solution, remaining after the precipitation step. The acid solution remaining after the precipitation step comprises either at least part of the at least one iron component and at least part of the added iron component.
The second step comprises a hydrolysis step, in which the remaining acid solution after the precipitation step is at least partly hydrolyzed, at least partly yielding a solid iron oxide component, an acid component, and optionally a remaining part of the iron salt component.

It is therefore advantageously possible according to the present invention that said acid solution comprising a metal containing material comprising at least one iron component and at least one non-iron metal component is created, e.g., by leaching an ore with an acid solution, within a pickling process, by adding a waste metal material to an acid solution etc.. Furthermore it is advantageous that an iron component is added to the acid solution that comprises a metal containing material within the precipitation step. In the precipitation step, at least part of at least one non-iron metal component (that is originally comprised in the metal containing material) is precipitated with the help of the added iron component and removed from the remaining acid solution (e.g., by means of a mechanical process such as a filtration). Increasing the iron concentration in said acid solution comprising the metal containing material decreases the solubility of the non-iron metal components in the said acid solution. Thus, at least part of the non-iron metal component comprised in the metal containing material is precipitated. It is even more advantageous that said iron component added to the acid solution is an iron salt component. In such a case, the solubility of non-iron metal components in the acid solution is decreased even more efficient because no acid in said acid solution is consumed due to a reaction between acid and the added iron component. Furthermore, it is advantageous according to the present invention that afterward (subsequent to the precipitation step) a hydrolysis step is performed (with the acid solution remaining after the precipitation step). The hydrolysis step yields according to the present invention at least an acid component, a solid iron oxide component that is separated from the acid solution and a remaining iron salt component. The above mentioned iron oxide component is yielded that can be mechanically separated from the acid solution. Therein, the remaining iron salt component, yielded from the hydrolysis step, comprises at least part of the iron component that was not turned into iron oxide during the hydrolysis step.

According to the present invention it is possible that the components (i.e. the remaining iron salt component, remaining after the hydrolysis step, the acid component yielded from the hydrolysis step and the iron oxide component) can potentially be reused for further external and/or internal processing, minimizing the production of waste during the process. With the inventive method, non-iron metal components can be separated from iron components both, e.g., comprised in a variety of ores. As the non-iron metal component comprised in the metal containing material is at least partly precipitated in the precipitation step, the acid solution remaining after the precipitation step can comprise the remaining non-iron metal component. In the hydrolysis step, said acid solution remaining after precipitation is partly hydrolyzed resulting in an acid component and a solid iron component and an optionally remaining iron salt component. The said remaining iron salt component comprises the non-hydrolyzed non-iron metal components originally comprised in the acid solution remaining from the precipitation step. Said acid solution remaining in the hydrolysis step is added to the precipitation step to decrease the solubility of non-iron metal components. This advantageously prevents an enrichment of a non-iron metal component in an acid solution that is generated when processing a metal containing material (e.g., an ore or a waste metal material) that comprises at least one iron component and at least one non-iron metal component. It also reduces the environmental and economic problems associated to a disposal of acid solutions comprising at least one non-iron metal component and an iron component that are generated, e.g., during pickling processes. In particular, it is advantageously possible according to the present invention to establish a continuous process or a batch process. A variety of different ores (as the metal containing material) can be treated with the inventive method. Also, the inventive method can be advantageously applied to many waste metal materials such as precipitation products or leaching products of industrial processes comprising at least one iron component and at least one non-iron metal component.

Preferable embodiments of the present invention are found in the dependent claims.

According to an embodiment of the present invention, it is preferred that at least part of the remaining part of the iron salt component, remaining after the hydrolysis step, is added to the acid solution comprising metal containing material in a precipitation step.

Thereby, it is possible according to an embodiment of the present invention to reuse at least part of the remaining part of the iron salt component, remaining after the hydrolysis step, for further process steps internally. This advantageously enables a continuous process flow (but also a batch process) that is cost-efficient and convenient and features a low generation of waste material as compared to the state of the art. The addition of an iron salt component to an acid solution comprising metal containing material can reduce the solubility of non-iron metal components in said solution. By adding an iron salt component to an acid solution comprising a metal containing material, arising, e.g., from pickling processes, it is therefore advantageously possible to reduce the amount of at least one non-iron metal component that is dissolved in the acid solution comprising metal containing material. Thereby, it is possible to realize a continuous process or a batch process.

According to a preferred embodiment of the present invention, the acid component is hydrochloric acid (HCI) and the iron salt component is ferric chloride (FeCl₃), wherein solid iron oxide preferably solid ferric oxide (Fe₂O₃) is obtained during the hydrolysis step, wherein preferably the hydrolysis step follows the chemical reaction FeCl3(aq) + 3H2O(I) => Fe2O3(s) + 6HCl(g).

Thereby, it is advantageously possible according to an embodiment of the present invention that the acid component is hydrochloric acid and that the iron salt component is ferric chloride. Moreover, it is advantageously possible that a solid iron oxide component preferably solid ferric oxide is preferably obtained during the hydrolysis step. Solid iron oxide preferable solid ferric oxide can be separated from the acid solution mechanically (e.g., by filtration). This advantageously makes an embodiment of the inventive method applicable to a number of industrially relevant metal containing materials such as a variety of ores or leaching products. In particular, the addition of ferric chloride to a hydrochloric acid solution that comprises said metal containing material in the precipitation step results in a reduced solubility of a variety of non-iron metal components in the hydrochloric acid solution. Accordingly, the addition of ferric chloride to such a solution helps to precipitate a variety of non-iron metal components, which can then be separated from the hydrochloric acid solution (e.g., by means of a mechanical separation process).

Thereby, it is furthermore advantageously possible according to an embodiment of the present invention that the amount of hydrochloric acid in the hydrochloric acid solution can be adjusted in a pre-evaporation step as a first sub-step of (or before) the hydrolysis step. In this pre-evaporation step, free hydrochloric acid can be generated. Thereby, it is advantageously possible according to the present invention that the inventive method and system can be used efficiently in order to recover hydrochloric acid from acid solution comprising metal containing material, e.g., waste liquids, especially pickling liquors of different industrial processes such as various pickling processes and galvanizing processes or the like. The hydrochloric acid can be reused internally (e.g., for leaching new metal containing material) or added to the preparatory treatment step (or leaching step) to gain an acid solution comprising a metal containing material or stored and used externally for other purposes. Since the disposal of hydrochloric acid contaminated waste as well as the acquisition of new hydrochloric acid is expensive, the inventive method and system are rather cost-efficient with respect to the state of the art.

According to an embodiment of the present invention, it is furthermore preferred that the remaining acid solution, remaining after the precipitation step, comprises at least 10 weight-%, preferable at least 20% or more of free hydrochloric acid.

According to the present invention, it is preferred that the precipitation step is conducted at a temperature of at least 10°C.

Thereby, it is possible according to an embodiment of the present invention that the precipitation step requires cooling of process solution.

According to an embodiment of the present invention, it is furthermore preferred that the remaining acid solution, remaining after the precipitation step, comprises at least 30 weight%, preferable at least 40 weight-% of ferric chloride.

According to an embodiment of the present invention, it is furthermore preferred that the metal containing material comprises at least two non-iron metal components, wherein the method further comprises a preparatory treatment step prior to performing the precipitation step, wherein by means of the preparatory treatment step, one non-iron metal component is removed from the metal containing material.

Thereby, it is possible to separate one of at the least two non-iron metal components from the metal containing material comprising at least one non-iron component and at least one iron component in a preparatory treatment step due to different solubility properties of the non-iron components before the precipitation step is performed. This can e.g., reduce the amount of material that needs to be separated from the acid solution within the precipitation step and facilitates the incorporation of an embodiment of the inventive method and system into a variety of industrial processes, where ores and waste metal materials are treated.

According to the embodiment of the present invention, it is preferable to add an acid component to the metal containing material in the preparatory treatment step.

Thereby, it is possible that at least at least a part of one non-iron component of at least two non-iron components comprised in the metal containing material is precipitated from the acid solution in the preparatory treatment step. The increase of the acid concentration in an acid solution decreases the solubility of non-iron metal components. In the preparatory treatment step, one non-iron metal component of at least two non-iron components is preferably precipitated because of different solubility properties and/or different concentration in the metal containing material. A non-iron metal component with a higher concentration in the metal containing material precipitates at lower acid concentration compared to a non-iron metal component with a lower concentration in the acid solution comprising the metal containing material. The precipitated non-iron metal component is removed from the acid solution by means of mechanical separation (e.g filtration). The remaining acid solution is transferred to the precipitation step.

According to another embodiment of the present invention, it is furthermore preferred that the metal containing material comprises an unsolvable oxide and at least one iron metal component and at least one non-iron metal component, wherein the method further comprises a leaching step as a first sub-step of the precipitation step and/or as an intermediate sub-step as part of the precipitation step and/or as a last (final) sub-step of the precipitation step and/or prior to the preparatory treatment step or as part of the preparatory treatment step. By means of adding hydrochloric acid within the leaching step, the unsolvable component is removed from the metal containing material.

It is thereby, e.g., possible to separate a non-soluble oxide (at least non-soluble within the employed acid solution e.g. silicon oxide) from the metal containing material comprising at least one iron component and at least one non-iron metal component before the precipitation step and/or preparatory treatment step is performed.

According to an embodiment of the present invention, it is furthermore preferred that at least part of the acid component, obtained during the hydrolysis step, is added for treating further metal containing material
-- in the precipitation step to the metal containing material resulting in the acid solution for conducting the precipitation step,
-- and/or in the preparatory treatment step prior to the precipitation step, wherein preferably the acid component is added to separate one non-iron metal component of at least two non-iron metal components from the metal containing material, comprising at least one iron component and at least two non-iron metal components. The residual metal containing material - comprising, subsequent to the preparatory treatment step, at least one non-iron metal component and at least one iron component - results in an acid solution, comprising the residual metal containing material.
-- and/or in the leaching step as a first and/or last sub-step of the precipitation step and/or as part of or prior to the preparatory treatment step, wherein preferably the acid component is added to separate at least non-solulable oxide component from the metal containing material comprising at least one non-iron metal component, an iron component and a non-solulable oxide. The residual metal containing material - comprising, subsequent to the leaching treatment step, at least one non-iron metal component and at least one non-iron metal component - results in an acid solution, comprising the residual metal containing material.

Thereby, it is possible to generate and reuse at least part of the acid component, obtained during the hydrolysis step, internally. Thus, e.g., further metal containing material can be leached with the help of at least part of the acid component, obtained during the hydrolysis step, which is advantageous for continuous processes and batch processes since the acids can be recovered locally at the industrial site, which reduces disposal costs and transportation costs and reduces consumption.

According to an embodiment of the present invention, it is furthermore preferred that one non-iron metal component in the metal containing material, comprising at least two non-iron metal components and at least one iron component, is aluminum. The said aluminum is precipitated as an aluminum salt in the preparatory treatment step prior to the precipitation step. Thereby, it is advantageously possible according to an embodiment of the present invention that industrially relevant metal containing materials comprising aluminum are processed. The processing of red mud and ores comprising aluminum components such as bauxite, alumina, fly ashes etc. can be facilitated with the inventive method and system. In the first step said metal containing material is treated in the leaching step with hydrochloric acid creating a metal containing chloride solution. In the preparatory treatment step the aluminum chloride (AlCl₃) is precipitated as aluminum chloride hexadydrate (AlCl₃*6H₂O) by adding concentrated HCl. The precipitate is removed from the remaining metal containing material by means of mechanical separation e.g. filtration. The remaining metal chloride solution is further treated in the precipitation step where at least a part of the remaining non-iron metal components is removed from the acid solution. The remaining acid solution is transferred to the hydrolysis step where at least a part of the iron component is hydrolyzed yielding an acid component, which is partly used internally in the leaching step and/or the preparatory treatment step, a solid iron oxide component, which is removed from the acid solution, and a remaining iron salt component, which is added to the precipitation step conducting the precipitation of at least a part of the non-iron metal components.

Additionally, the object is achieved by a system for processing a metal containing material comprising at least one non-iron metal component and at least one iron component, wherein the system is configured such that:
-- at least a part of the at least one non-iron metal component is precipitated in an acid solution. The acid solution comprises the said metal containing material and an iron component, being added to the acid solution. The said iron component added to the solution comprises either a further iron component and/or an iron component in the form of an iron salt component. By means of the precipitation step, the at least part of the at least one non-iron metal component is removed from the remaining acid solution, remaining after the precipitation step. The solution remaining after the precipitation step comprises either at least part of the at least one iron component and/or at least part of the added iron component.
-- and such that the remaining acid solution after the precipitation step is at least partly hydrolyzed, at least partly yielding a solid iron oxide component, an acid component, and optionally a remaining part of the iron salt component.

It is therefore advantageously possible according to the present invention that said acid solution comprising a metal containing material comprising at least one iron component and at least one non-iron metal component is created, e.g., by leaching an ore with an acid solution, within a pickling process, by adding a waste metal material to an acid solution etc.. Furthermore, it is advantageous that an iron component is added to the acid solution that comprises a metal containing material within the precipitation step.
Increasing the iron concentration in acid solution comprising the said metal containing material decreases the solubility of the non-iron metal components in the said acid solution. Thus at least part of the non-iron metal component comprised in the metal containing material is precipitated. It is even more advantageous that said iron component added to the acid solution is an iron salt component. In such a case, the solubility of non-iron metal components in the acid solution is decreased even more efficient because no acid in said acid solution is consumed due to a reaction between acid and the added iron component. Furthermore, it is advantageous according to the present invention that afterward (subsequent to the precipitation step) a hydrolysis step is performed (with the remaining acid solution remaining after the precipitation step). The hydrolysis step yields according to the present invention at least an acid component a solid iron oxide component that is separated from the remaining acid solution and a remaining iron salt component. The above mentioned iron oxide component is yielded that can be mechanically separated from the acid solution. Therein, the remaining iron salt component, yielded from the hydrolysis step, comprises at least part of the iron component that was not turned into ferric oxide during the hydrolysis step.

According to the present invention, the components (i.e. the remaining iron salt component, remaining after the hydrolysis step, the acid component yielded from the hydrolysis step and the iron oxide component) can potentially be reused for further external and/or internal processing, minimizing the production of waste during the process. With the inventive system, non-iron metal components can be separated from iron components both, e.g., comprised in a variety of ores. This advantageously prevents an enrichment of a non-iron metal component in an acid solution that is generated when processing a metal containing material (e.g., an ore or a waste metal material) that comprises at least one iron component and at least one non-iron metal component. It also reduces the environmental and economic problems associated to a disposal of acid solutions comprising at least one non-iron metal component and an iron component that are generated, e.g., during pickling processes. In particular, it is advantageously possible according to the present invention to establish a continuous process or a batch process, A variety of different ores (as the metal containing material) can be treated with the inventive system. Also, the inventive system can be advantageously applied to many waste metal materials such as precipitation products or leaching products of industrial processes comprising at least one iron component and at least one non-iron metal component.

According to an embodiment of the present invention, the system is additionally configured such that at least part of the remaining part of the iron salt component, remaining after the hydrolysis step, is added to the solution comprising metal containing material in a precipitation step.

Thereby, it is possible according to an embodiment of the present invention to reuse at least part of the remaining part of the iron salt component, remaining after the hydrolysis step, for further process steps internally. This advantageously enables a continuous process flow that is cost-efficient and convenient and features a low generation of waste material as compared to the state of the art. The addition of an iron salt component to an acid solution comprising metal containing material can reduce the solubility of non-iron metal components in said solution. By adding an iron salt component to an acid solution comprising a metal containing material, arising, e.g., from pickling processes, it is therefore advantageously possible to reduce the amount of at least one non-iron metal component that is dissolved in the acid solution comprising metal containing material. Thereby, it is possible to realize a continuous process or a batch process.

According to a preferred embodiment of the present invention, a treatment of metal containing material with an acid component or an acid solution (e.g., a leaching of a metal containing material (e.g., an ore, residual material etc.) by means of at least adding an acid component or an acid solution to the metal containing material occurs and/or a mixing of an acid component (or an acid solution) and a metal containing material) is performed during the leaching step prior to the precipitation step or in the precipitation step.

According to a preferred embodiment of the present invention, the precipitation step, including the treatment of the metal containing material with an acid component or an acid solution (e.g., the leaching of a metal containing material) containing an iron component, occurs in one containment and preferable the preparatory treatment step and the leaching step occurs in one containment.

According to a preferred embodiment of the present invention, a method according to the present invention is realized as a continuous process.

According to another preferred embodiment of the present invention, a method according to the present invention is realized as a batch process.

### BRIEF DESCRIPTION OF THE DRAWINGS

Figure 1 schematically illustrates a first embodiment of a system according to the present invention for processing metal containing material using a continuous process.
Figure 2 schematically illustrates a second embodiment of a system according to the present invention for processing metal containing material using a continuous process.
Figure 3 schematically illustrates a third embodiment of a system according to the present invention for processing metal containing material using a continuous process.
Figure 4 schematically illustrates a fourth embodiment of a system according to the present invention for processing metal containing material using a batch process.
Figure 5 schematically illustrates a fifth embodiment of a system according to the present invention for processing metal containing material using a continuous process.

### DETAILED DESCRIPTION

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described of illustrated herein.

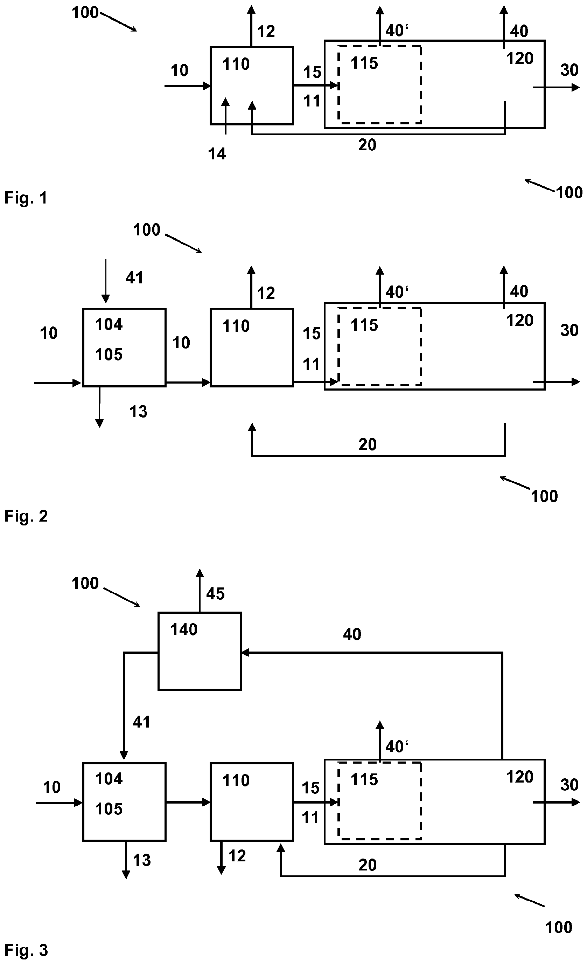

In **Figure 1****,** a system 100 according to a first embodiment of the present invention for processing metal containing material using a process is schematically illustrated. Therein, a precipitation step 110 with an acid solution (e.g., a hydrochloric acid solution) comprising a metal containing material 10 that comprises an iron component 11 and at least one non-iron metal component 12 is performed. In the precipitation step 110, at least one non-iron metal component 12 is precipitated as a non-iron metal chloride with the help of an added iron component comprising an iron salt component 20 (e.g., ferric chloride) and/or a further iron component 14 and consequently the precipitated solid non-iron metal component 12 (preferably a non-iron metal salt) is separated from the acid solution by means of a mechanical separation method such as a filtration etc.. Next, an - optional - pre-evaporation step 115, prior to or within the hydrolysis step 120, is performed to adjust the HCl concentration in the remaining acid solution 15 remaining after the precipitation step 110. In the optional pre-evaporation step, an acid component 40' can be generated (in the form of free gaseous HCl). The evaporated acid component 40' (potentially together with evaporated H₂O) is separated from the acid solution and gathered. In the following hydrolysis step 120, a solid iron oxide component 30, an optional iron salt component 20 (comprised in the remaining acid solution or separated from the acid solution remaining after the hydrolysis step), an acid component 40 (gaseous HCl) and potentially H₂O are yielded. The solid iron oxide component 30 is separated from the acid solution remaining after the hydrolysis step, e.g., by a mechanical process such as a filtration and preferably at least part of the acid component 40 (and possibly also H₂O) is separated from the remaining acid solution as well. In the embodiment shown in **Figure 1****,** the separated acid components 40', 40 from the pre-evaporation step 115 and the hydrolysis step 120 are gathered and can be reused externally. In the following, at least part of the remaining part of the iron salt component 20 (in this case ferric chloride) is reused for the precipitation step 110 with acid solution comprising metal containing material 10, wherein again non-iron metal components 12 are precipitated as described above, establishing a continuous process

In **Figure 2****,** a system 100 according to a second embodiment of the present invention for processing metal containing material using a process is schematically illustrated. In the embodiment shown in **Figure 2****,** a leaching step 105, prior to the precipitation step 110, is performed, wherein an acid solution comprising a metal containing material 10 is prepared. According to an embodiment of the present invention, in leaching step 105 a metal containing material 10, e.g., an ore, etc. is leached with an acid component 41 (e.g., HCl) to generate the acid solution comprising the metal containing material 10. Non-soluble components 13 that can be comprised in the generated acid solution are at least partly separated from the acid solution, e.g., by a mechanical process. Next, a precipitation step 110 with this acid solution is performed. In the precipitation step 110, the at least one non-iron metal component 12 is precipitated as a non-iron metal chloride with the help of an added iron component comprising an iron salt component 20 and/or a further iron component 14 (the latter case is not shown in **Figure 2**) and consequently the precipitated solid non-iron metal component 12 is separated from the acid solution by means of a mechanical separation method such as a filtration etc.. Next, an - optional - pre-evaporation step 115, prior to the hydrolysis step 120, is performed to adjust the HCl concentration in the remaining acid solution 15, remaining after the precipitation step 110. In the optional pre-evaporation step, a free acid component 40' can be generated (in the form of free gaseous HCl). The evaporated acid component 40' (potentially together with evaporated H₂O) is separated from the acid solution and gathered. In the following hydrolysis step 120, solid iron oxide component 30, an optional iron salt component 20 (comprised in the remaining acid solution or separated from the acid solution remaining after the hydrolysis step), a gaseous acid component 40 and potentially H₂O are yielded. The solid iron oxide component 30 is separated from the acid solution remaining after the hydrolysis step, e.g., by a mechanical process such as a filtration and preferably at least part of the generated acid component 40 (and possibly also H₂O) is separated from the acid solution as well. In the embodiment shown in **Figure 2**, the separated acid components 40', 40 from the pre-evaporation step 115 and the hydrolysis step 120 are gathered and can be reused externally. In the following, at least part of the remaining part of the iron salt component 20 (in this case ferric chloride) is reused for the precipitation step 110 with more acid solution comprising metal containing material 10, wherein again non-iron metal components 12 are precipitated as described above, establishing a continuous process. It is preferred that at least a part of the leaching step 105 and the precipitation step 110 occur in one containment.

In **Figure 3**, a system 100 according to a third embodiment of the present invention for processing metal containing material using a process is schematically illustrated. In this embodiment, the metal containing material 10 comprising at least one iron component 11 and at least one non-iron metal component 12 is leached at least partly with an acid component 41, preferably HCl, in a leaching step 105 generating an acid solution. Next non-soluble components 13 that can be comprised in the generated acid solution are at least partly separated from the acid solution, e.g., by a mechanical process. In the precipitation step 110, a non-iron metal component 12 is at least partly precipitated (i.e., as a non-iron metal chloride) using ferric chloride and consequently the solid non-iron metal chloride components (12) are separated from the acid solution by means of a mechanical separation method, such as a filtration or another method. Next, an - optional - pre-evaporation step 115 is performed to adjust the acid (HCl) concentration prior to the hydrolysis step 120 in the acid solution 15 remaining after the precipitation step 110. In the optional pre-evaporation step 115, a free acid component 40' (free HCl) is generated. The evaporating free acid component 40' (possibly together with evaporating H₂O) is separated from the acid solution and gathered. In the following hydrolysis step 120, a solid iron oxide component 30, an iron salt component 20 (comprised in the remaining acid solution or separated from the acid solution remaining after the hydrolysis step), a gaseous acid component 40 (HCl) and potentially H₂O 45 are yielded. The solid iron oxide component 30 is separated from the acid solution, e.g., by a mechanical process such as a filtration. At least part of the generated gaseous acid component 40 (and potentially the H₂O 45) is separated from the acid solution during the hydrolysis step 120 and further used internally. For this internal use, a drying step 140 is performed, wherein at least part of the H₂O 45 is separated from the HCl 40 that was generated during the hydrolysis step 120, yielding an acid component 41 (HCl component). The acid component 41 is consequently reused (for leaching or adjusting the acid concentration) in the leaching step 105 together with new metal containing material 10, which comprises at least one iron component 11 and at least one non-iron metal component 12, generating new acid solution. At least part of the iron salt component 20 (in this case ferric chloride) which is yielded from the hydrolysis step 120 is reused in the precipitation step 110 as described above. Thus, a closed acid loop process is established.

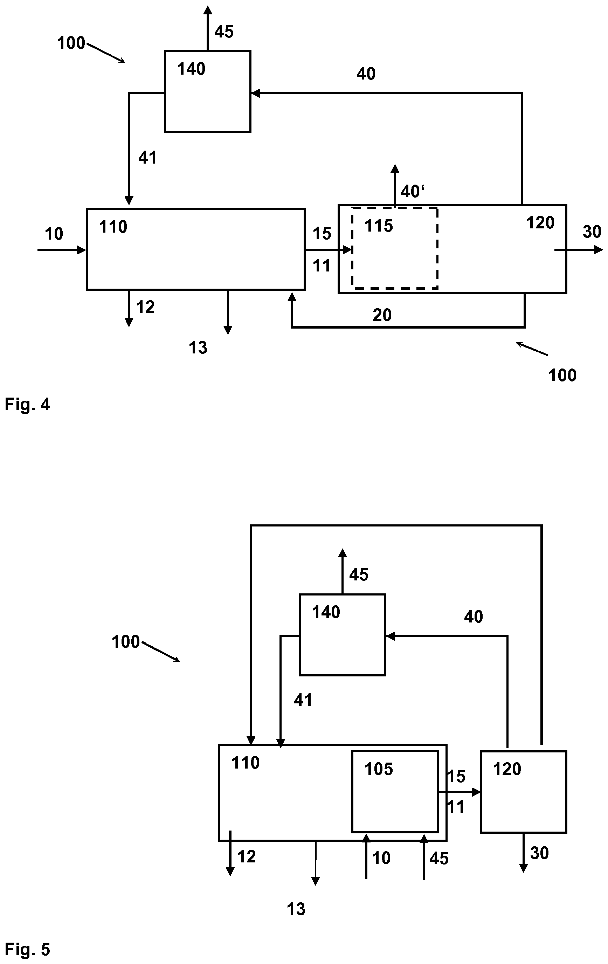

In **Figure 4**, a system 100 according to a fourth embodiment of the present invention for processing metal containing material using a batch process is schematically illustrated. In this embodiment, the metal containing material 10 comprising at least one iron component 11 and at least one non-iron metal component 12 is leached at least partly with an acid component 41 during the precipitation step 110 generating an acid solution. Next non-soluble components 13 that can be comprised in the generated acid solution are at least partly separated from the acid solution, e.g., by a mechanical process. In the precipitation step 110, a non-iron metal component 12 is at least partly precipitated (i.e., as a non-iron metal chloride) using ferric chloride and consequently the solid non-iron metal chloride components are separated from the acid solution by means of a mechanical separation method, such as a filtration or another method. Next, an - optional - pre-evaporation step 115 is performed to adjust the HCl concentration prior to the hydrolysis step 120 in the remaining acid solution 15, remaining after the precipitation step 110. In the optional pre-evaporation step, a free acid component 40' (HCl) is generated. The evaporating free acid component 40' (possibly together with evaporating H₂O) is separated from the acid solution and gathered. In the following hydrolysis step 120, a solid iron oxide component 30, an iron salt component 20 (comprised in the remaining acid solution or separated from the remaining acid solution, remaining after the hydrolysis step), a gaseous acid component 40 (HCl) and potentially H₂O 45 are yielded. The solid iron oxide component 30 is separated from the acid solution, e.g., by a mechanical process such as a filtration. At least part of the generated gaseous acid component 40 (and potentially the H₂O 45) is separated from the acid solution during the hydrolysis step 120 and further used internally. For this internal use, a drying step 140 is performed, wherein at least part of the H₂O 45 is separated from the acid component 40 that was generated during the hydrolysis step 120, yielding an acid component 41 (HCl). The acid component 41 is consequently reused batchwise (for leaching or adjusting the acid concentration) in the precipitation step 110 together with additional metal containing material 10, which comprises at least one iron component 11 and at least one non-iron metal component 12, generating further acid solution. At least part of the iron salt component 20 (in this case ferric chloride) which is yielded from the hydrolysis step 120 is reused in a precipitation step 110 as well. Thus, a batch process can be realized. The leaching of metal containing material 10 and the precipitation of a non-iron metal component 12 preferably both occur during the precipitation step within a single containment.

In an alternative embodiment, the processes shown in **Figure 3** and **Figure 4** can be adapted such that the gaseous acid component 40' which is separated from the acid solution during the pre-evaporation step 115 (and potentially also the H₂O which is separated along with the acid component 40') is reused together with the gaseous acid component 40 and H₂O generated during the hydrolysis step 120 internally, e.g., for a potential drying step 140 and afterward (or directly) as an acid component 41 for leaching additional metal containing material 10 (e.g., ores).

In **Figure 5**, a system 100 according to a fifth embodiment of the present invention for processing metal containing material using a continuous process is schematically illustrated. In this embodiment, a leaching step 105 is performed as a final sub-step within the precipitation step 110 and prior to a hydrolysis step 120. Within the leaching step 105 metal containing material 10 comprising at least one iron component 11 and at least one non-iron metal component 12 is leached with the acid solution remaining from (i.e. within) the precipitation step 110 prior to the leaching step 105 and preferably comprising a free acid component. Next non-soluble components 13 that can be comprised in the generated acid solution are at least partly separated from the acid solution, e.g., by a mechanical process. After the leaching step 105, in a following hydrolysis step 120, a solid iron oxide 30, an iron salt component 20 (comprised in the remaining acid solution, remaining after the hydrolysis step), a non-iron metal component 12 (comprised in the remaining acid solution, remaining after the hydrolysis step), a gaseous acid component 40 (HCl) and potentially H₂O 45 are yielded from the remaining acid solution 15 that was used for the hydrolysis step 120. The solid iron oxide component 30 is separated from the acid solution within the hydrolysis step 120. At least part of the generated gaseous acid component 40 (and potentially the H₂O 45) is separated from the acid solution during the hydrolysis step 120 and further used internally. For this internal use, a drying step 140 is performed, wherein at least part of the H₂O 45 is separated from the acid component 40 that was generated during the hydrolysis step 120, yielding an acid component 41. The acid component 41 is consequently used for a precipitation step 110. At least part of the acid solution yielded from the hydrolysis step 120 and comprising at least part of a non-iron metal component 12 and part of an iron salt component 20 (in this case ferric chloride) is further used for the precipitation step 110 as well. In the precipitation step 110, at least part of a non-iron metal component 12 is precipitated as a non-iron metal chloride and separated from the acid solution by means of a mechanical separation method such as a filtration etc.. The remaining acid solution, remaining from the precipitation step 110 prior to the leaching step 105, is reused within the leaching step 105. Thus, a closed acid loop process is established.

### REFERENCE SIGNS

- 10: metal containing material
- 11: iron component
- 12: non-iron metal component
- 13: non-soluble component
- 14: further iron component
- 15: remaining acid solution
- 20: iron salt component
- 30: ferric oxide component
- 40: acid component
- 40': acid component
- 41: acid component
- 45: H₂O
- 100: system
- 104: preparatory treatment step
- 105: leaching step
- 110: precipitation step
- 115: pre-evaporation step
- 120: hydrolysis step
- 140: drying step

## Claims

1. Method for processing a metal containing material (10), comprising at least one non-iron metal component (12) and at least one iron component (11), wherein the metal containing material (10) is at least partly separated into a solid iron oxide component (30) and into at least part of the at least one non-iron metal component (12), the method comprising the following steps:
-- in a precipitation step (110), at least part of the at least one non-iron metal component (12) is precipitated in an acid solution, the acid solution comprising the metal containing material (10) and an added iron component, being added to the acid solution and comprising either a further iron component (14) and/or an iron component in the form of an iron salt component (20), and, by means of the precipitation step (110), at least part of the at least one non-iron metal component (12) is removed from the remaining acid solution (15), remaining after the precipitation step (110) and comprising either at least part of the at least one iron component (11) and/or at least part of the added iron component,
-- in a hydrolysis step (120), the remaining acid solution (15) is at least partly hydrolyzed, at least partly yielding a solid iron oxide component (30), an acid component (40), and optionally a remaining part of the iron salt component (20).

2. Method according to one of the preceding claims, wherein at least part of the remaining part of the iron salt component (20), remaining after the hydrolysis step (120), is used in a precipitation step (110) with further metal containing material (10).

3. Method according to one of the preceding claims, wherein the metal containing material (10) comprises at least two non-iron metal components (12), wherein the method further comprises a preparatory treatment step (104) prior to performing the precipitation step (110), wherein by means of the preparatory treatment step (104), one non-iron metal component (12) is removed from the metal containing material (10).

4. Method according to one of the preceding claims, wherein the acid component (40) is hydrochloric acid (HCl) and wherein the iron salt component (20) is ferric chloride (Iron(III) chloride),
wherein preferably solid iron oxide is obtained during the hydrolysis step (120),

5. Method according to one of the preceding claims, wherein the hydrolysis step (120) comprises a pre-evaporation step (115) as a first part such that, during the pre-evaporation step (115), an acid component (40') is generated and, subsequent to the pre-evaporation step (115), the remaining acid solution (15), remaining after the precipitation step (110) and/or the pre-evaporation step (115), is at least partly hydrolyzed, wherein preferably the acid component (40') generated during the pre-evaporation step (115) is extracted and/or gathered, wherein more preferably the acid component (40) yielded from the hydrolysis step (120) is extracted and/or gathered.

6. Method according to one of the preceding claims, wherein a leaching step (105) is performed as a first sub-step, intermediate sub-step, and/or last sub-step of the precipitation step (110) and/or before or as part of the preparatory treatment step (104), wherein especially during the leaching step (105) metal containing material (10) is at least partly leached with an acid solution and/or an acid component (40, 40', 41), wherein preferably during the leaching step at least one non-iron metal component (12) is removed from the acid solution, especially in the form of a non-soluble component (13).

7. Method according to one of the preceding claims, wherein the remaining acid solution (15), remaining after the precipitation step (110), comprises at least 10 weight-%, preferable at least 20% or more of free hydrochloric acid..

8. Method according to one of the preceding claims, wherein the precipitation step (110) is conducted at a temperature of at least 10°C.

9. Method according to one of the preceding claims, wherein the remaining acid solution (15), remaining after the precipitation step (110), comprises at least 30 weight%, preferable at least 40 weight-% of ferric chloride.

10. Method according to one of the preceding claims, wherein at least part of the acid component (40), obtained during the hydrolysis step (120), and/or at least part of the acid component (40'), obtained during the pre-evaporation step (115), and/or an acid solution and/or the acid component (41), is used for treating further metal containing material (10)
-- during the precipitation step (110), for treating further metal containing material (10), and resulting in the acid solution for conducting the precipitation step (110),
-- and/or in the preparatory treatment step (104) for treating further metal containing material (10), wherein preferably the acid component (40, 40') and/or an acid solution and/or the acid component (41), and the residual metal containing material (10) - comprising, subsequent to the preparatory treatment step (104), at least one non-iron metal component (12)- result in an acid solution, comprising the residual metal containing material (10)
-- and/or in the leaching step (105) for leaching further metal containing material (10), wherein preferably the acid solution and/or the acid component (40, 40', 41) and the metal containing material (10) - comprising, subsequent to the leaching step (105), at least one non-iron metal component (12) - result in an acid solution, comprising the residual metal containing material (10).

11. Method according to one of the preceding claims, wherein the metal containing material (10) is red mud and/or at least one non-iron metal component (12) is aluminum wherein the aluminum chloride (AlCl₃) is precipitated in the preparatory treatment step (104) as aluminum chloride hexadydrate (AlCl₃ 6H₂O) and is removed from the remaining metal containing material (10), wherein the metal containing material (10) comprises at least one non-iron metal component (12) after the preparatory treatment step (104).

12. System (100) for processing a metal containing material (10), the metal containing material (10) comprising at least one non-iron metal component (12) and at least one iron component (11), wherein the system is configured such that:
-- at least part of the at least one non-iron metal component (12) is precipitated in an acid solution, the acid solution comprising, besides the metal containing material (10), an added iron component, being added to the acid solution and comprising either a further iron component (14) and/or an iron component in the form of an iron salt component (20), and, by means of the precipitation step (110), the at least part of the at least one non-iron metal component (12) is removed from the remaining acid solution (15), remaining after the precipitation step and comprising either at least part of the at least one iron component (11) and/or at least part of the added iron component,
-- and such that the remaining acid solution (15) is at least partly hydrolyzed, at least partly yielding a solid iron oxide component (30), an acid component (40), and optionally a remaining part of the iron salt component (20).

13. System (100) according to claim 12, wherein the system (100) is additionally configured such that at least part of the remaining part of the iron salt component (20), remaining after the hydrolysis step (120), is used in a precipitation step (110) with further metal contain material (10).
